# EUROPÄISCHE PATENTSCHRIFT

(11) **EP 0 510 306 B1**
(45) Veröffentlichungstag und Bekanntmachung des Hinweises auf die Patenterteilung: **05.04.1995**
(21) Anmeldenummer: 92101654.9
(22) Anmeldetag: 01.02.1992
(51) Int. Cl.: B29C 70/00, B29C 37/00, B29B 15/12, F16L 55/16

(54) **Verfahren zur Herstellung eines armierten, härtbaren Kunststoffschlauches und Vorrichtung dazu**
Method and apparatus for manufacturing a reinforced curable plastic tube
Procédé et dispositif pour fabrication d'un tuyau plastique armé durcissable

(30) Priorität: 20.04.1991 DE 4113002
(43) Veröffentlichungstag der Anmeldung: 28.10.1992
(73) Patentinhaber: TEERBAU GmbH, D-45257 Essen (DE)
(72) Erfinder: Romeiss, Hans, Dr., W-4300 Essen 1 (DE); Jürgenlohmann, Peter, W-4830 Gütersloh (DE); Schüller, Artur, W-5360 Linz/Rhein (DE)

(56) Entgegenhaltungen:
- WO-A-91/18234
- DE-A- 3 622 055
- FR-A- 2 466 483
- GB-A- 1 340 068
- US-A- 2 596 162

## Beschreibung

Die Erfindung betrifft ein Verfahren zur Herstellung eines armierten, härtbaren Kunststoffschlauches zur Sanierung von nicht begehbaren Leitungen und eine Vorrichtung zur Durchführung des Verfahrens.

Es ist bekannt, nicht begehbare Abwasserrohre und -kanäle mit härtbaren, armierten Kunststoffschläuchen auszukleiden und diese im eingebauten Zustand auszuhärten.

In der britischen Patentschrift 1 340 068 wird beispielsweise vorgeschlagen, einen flach zusammengelegten Kunststoffschlauch von der Rolle abzuziehen, mit einem genadelten Faservlies so zu umhüllen, daß sich die Vliesränder überlappen, die Vliesränder miteinander zuverbinden, dieses Sandwich auf der Ober- und Unterseite mit je einer Folienbahn abzudecken und die Ränder der Folienbahnen miteinander zu verschweißen.

Das Faservlies kann dabei mit Filamenten oder einem gewebten Netz verstärkt sein. Das zwischen den Folien eingeschlossene Faservlies wird mit einem härtbaren Harz imprägniert, vorzugsweise indem das Harz durch die äußere Folie in das Vlies eingespritzt, und ggf. der Sandwich-Schlauch durch einen Walzenstuhl geführt wird, um eine besser Verteilung des Harzes zu erreichen. Als härtbare Harze werden vorzugsweise Polyester oder Epoxidharze verwendet, und der innere Schlauch besteht meistens aus Polyethylen.

Die Einbauweise eines solchen Schlauches ist in der DE 23 62 784 C2 beschrieben. Er wird mittels eines Gases oder einer Flüssigkeit in das zu sanierende Rohr eingestülpt und an die Rohrwandung angepreßt. Das Aushärten kann durch Erwärmen des Druckmediums oder auch mit Hilfe von UV-Strahlen (EP 0 122 246 A1) erfolgen.

Das Umstülpverfahren wurde eingeführt, weil die Sandwich-Schläuche durch die Rauhigkeit der zu sanierenden Rohre beim Hindurchziehen beschädigt wurden. Um dies zu verhindern, wurde auch vorgeschlagen, den Schlauch auf einer Wagen- oder Schlittenkette in das Rohr zu tranportieren (WO 88/09897).

Nachteilig an dem Umstülpverfahren ist, daß nur relativ dünnwandige Schläuche so verlegt werden können, die in vielen Fällen keine ausreichende Festigkeit aufweisen.

Alle bekannten Herstellungsverfahren dieser mehrlagigen armierten, aushärtbaren Kunststoffschläuche haben den Nachteil, daß zwischen dem inneren und äußeren Schlauch Luftblasen eingeschlossen bleiben, die zu Poren innerhalb des ausgehärteten armierten Kunststoffrohres führen. Nach dem Herausziehen oder einer Beschädigung des inneren Folienschlauches besteht daher die Gefahr, daß das sanierte Rohr nicht mehr dicht ist.

Es bestand daher die Aufgabe, ein Herstellungsverfahren zu entwickeln, bei dem diese Lufteinschlüsse vermieden werden.

Die Aufgabe wird erfindungsgemäß dadurch gelöst, daß die in Schichten um den flachen inneren Folienschlauch 1 gelegten Faservliese, -gewebe oder -gelege 3, 7 und 11 in einer mit Harz gefüllten Tränkwanne 20 getränkt und in der Tränkwanne 20 von den beiden Deckfolien 26 und 27 umhüllt werden, deren Ränder beim Abpressen des Kunststoffschlauches miteinander verschweißt werden, während der fertige Kunststoffschlauch aus der Tränkwanne 20 austritt.

Die Fertigungsgeschwindigkeit ist natürlich davon abhängig, wie schnell sich die Faserschichten vollständig mit Harz füllen. Dabei spielt die Harzviskosität und die Dicke der Faserschichten eine Rolle. Um die Fertigungsgeschwindigkeit zu erhöhen, kann in der Einlaufstrecke zur Tränkwanne eine Vakuumkammer eingebaut sein, durch die der mit den Faserschichten umhüllte innere Folienschlauch hindurchgezogen wird. Durch den in den Faserschichten erzeugten Unterdruck wird bereits am Ende der Einlaufstrecke Harz zu den Faserschichten luftfrei hineingezogen.

Das Evakuieren der Faserschichten bewirkt weiterhin eine Trocknung der Faser und damit eine bessere Haftung zwischen Faser und Harz.

Die üblicherweise verwendeten Polyesterharze enthalten u. a. Styrol (EP 0 391 270 A1), gegen das die meisten empfohlenen Folienschläuche z. B. aus Polyethylen nur wenig beständig sind.

Beim Aushärten besteht die Gefahr, daß Styrol in das Innere des Kunststoffschlauches eintritt. In Einzelfällen ist es sogar zu Bränden gekommen. Aus diesem Grunde wird vorgeschlagen, als innere und äußere Abdichtung eine Folie aus Polyvinylalkohol zu verwenden, die gegen Styrol beständig ist. Auf der Innenseite kann ein nahtlos extrudierter Folienschlauch eingesetzt werden. Die äußere Folienabdichtung erfolgt durch Folienbahnen, wobei die Ränder der äußeren Abdichtung durch Quellverschweißen mit Wasserdampf verbunden werden. Wenn die Aushärtung durch UV-Licht erfolgen soll, ist es sinnvoll, die äußere Folie durch Pigmentierung oder Beschichtung für UV-Licht undurchlässig zu machen, um so die harzgetränkten Faserschichten gegen den UV-Anteil des Tageslichts zu schützen.

Bei der Sanierung von teilweise zerbrochenen Rohrleitungen kann nicht von einer über den Umfang gleichmäßig verteilten Belastung des ausgehärtetn Kunststoffschlauches ausgegangen werden. Es treten vielmehr punkt- oder linienförmige Belastungsspitzen auf, die nur von ausreichend verstärkten Schläuchen mit entsprechender Wandstärke aufgenommen werden können.

Aus diesem Grunde wird ein mehrlagiger Faser-Schichtaufbau aus einem äußeren Fasergelege mit Diagonal- und Längsverstärkung, das mit einer Wirrfaser vernäht ist, einer mittleren Lage aus einem genadelten Faservlies, einer inneren Lage, die dem äußeren Fasergelege entspricht, und auf der Innenseite einem Oberflächenvlies vorgeschlagen.

Das außen und innen liegende Diagonalgelege mit der Wirrfaserlage dient der Armierung, das zwischenliegende dickenvariable Faservlies erzeugt die durchmesserabhängige Wanddicke und das Oberflächenvlies ergibt auf der Innenseite eine glasarme, harzreiche Korrosionsschicht.

Die einzelnen Faser- und Vliesschichten haben vorzugsweise lose überlappende Ränder. Die Überlappungen sind von Schicht zu Schicht gegeneinander versetzt und insbesondere gleichmäßig über den Umfang des Schlauches verteilt. So entsteht im Laminat keine querende Trennungsstufe. Bei einem derart zusammengefügten Komplex bedarf es keiner Verbindungsnaht.

Da ein solcher Kunststoffschlauch für den Einbau nach dem Umstülpverfahren wenig geeignet ist, wird er vorzugsweise in zusammengelegtem Zustand in das zu sanierende Rohr eingezogen. Um eine Verletzung der äußeren Folienschicht zu vermeiden, wird der zusammengelegte Schlauch mit einer Schutzbahn, beispielsweise einer Gewebebahn umhüllt. Diese Schutzbahn kann auf der Innenseite mit einer für UV-Licht undurchlässigen Beschichtung versehen sein, wenn nicht bereits die äußere Folie entsprechend ausgerüstet ist. Sie kann nach dem Einbringen des Kunststoffschlauches in die zu sanierende Rohrleitung herausgezogen werden oder in dem Rohr verbleiben. Im letzeren Fall legt sich die Schutzbahn beim Entfalten des Kunststoffschlauches auf die Rohrsohle und bildet einen Schutz gegen dort eventuell verbleibende scharfkantige Verschmutzungen.

Die Erfindung wird anhand der Zeichnungen näher erläutert.

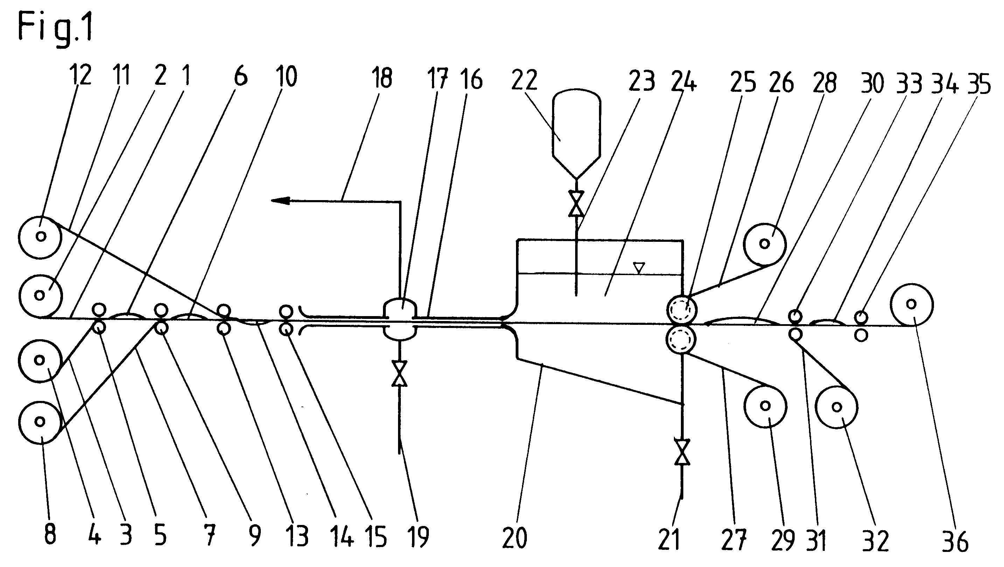

Fig. 1 zeigt den prinzipiellen Aufbau der Fertigungsvorrichtung und Fig. 2 einen Schnitt durch die Randverschweißungsvorrichtung für die äußere Folie bei Verwendung von Polyvinylalkohol-Folien.

In Fig. 3 ist ein Schnitt durch den fertigen, zusammengelegten Kunststoffschlauch dargestellt, wobei die einzelnen Schichten im Gegensatz zur Wirklichkeit nicht zusammengepreßt sondern aufgelockert gezeichnet sind; um die Einzelheiten deutlicher hervortreten zu lassen.

Der flach zusammengelegte Folienschlauch 1 aus Polyvinylalkohol für die innere Dichtungsschicht wird von der Rolle 2 abgezogen und zusammen mit der ersten Faserschicht 3 aus einem Glasfasergelege mit 20 % der Filamente in Längsrichtung, 40 % der Filamente unter einem Winkel von 45 ° und 40 % der Filamente unter einem Winkel von -45 ° zur Längsrichtung, das mit einer dünnen Schicht Wirrfasern vernäht ist, von der Rolle 4 durch das erste Walzenpaar 5 gezogen.

Die untenliegende Faserschicht 3 wird in der Faltvorrichtung 6 so um den Folienschlauch 1 gelegt, daß ihre Ränder sich auf der Oberseite überlappen. Nun wird das Glasvlies 7 von der Rolle 8 von unten zugefahren. Der Schichtaufbau läuft durch das Walzenpaar 9, hinter dem das Vlies 7 in der Faltvorrichtung 10 so zur Oberseite umgelegt wird, daß sich die Ränder des Vlieses 7 an einer anderen Stelle als die der Faserschicht 3 überdecken.

Anschließend wird die Faserschicht 11, die der Faserschicht 3 im Aufbau entspricht, von der Rolle 12 abgezogen und in dem Spalt des Walzenpaares 13 von oben auf den Schichtaufbau gelegt und in der Faltvorrichtung 14 nach unten um den Schichtaufbau gelegt, wobei sich die Ränder wieder überdecken. Dieser Aufbau durchläuft nun das Walzenpaar 15 und den enganliegenden Führungsschacht 16, in dem sich die Vakuumkammer 17 mit den Vakuumanschluß 18 und der Belüftungs- bzw. Ablaßleitung 19 befindet. Die Länge des Führungsschachtes 16 auf beiden Seiten der Vakuumkammer 17 ist so bemessen, daß in der Kammer ein Druck von etwa 50 mbar erreicht wird.

Der Führungsschacht 16 mündet unterhalb der Harzoberfläche in die Tränkwanne 20 mit der Ablaßleitung 21, die aus dem Tank 22 über eine Tauchleitung 23 mit dem härtbaren, fließfähigen Harz 24 gefüllt wird.

Gegenüber der Einmündung des Führungsschachtes 16 befindet sich in der Tränkwanne 20 eine Öffnung, in der ein Walzenpaar 25 drehbar angeordnet ist. Die Enden der Walzen 25 ragen aus der Tränkwanne 20 heraus und haben nur einen sehr engen Spalt. Im mittleren Bereich ist der Spalt weiter, entsprechend der Dicke des Schlauch-Schichtaufbaus. Im äußeren Bereich haben die Walzen 25 gegenüber den Tränkwanne 20 nur einen engen Spalt, der gerade ausreicht, die äußeren Deckfolien 26 und 27 von den Rollen 28 und 29 durchtreten zu lassen. Beim Durchtritt zur das Walzenpaar 25 wird der Schichtaufbau mit den Deckfolien 26 und 27 miteinander verschweißt, ohne das Luft eindringen kann oder die Oberfläche des nun fertigen Kunststoffschlauches mit Harz verschmutzt wird.

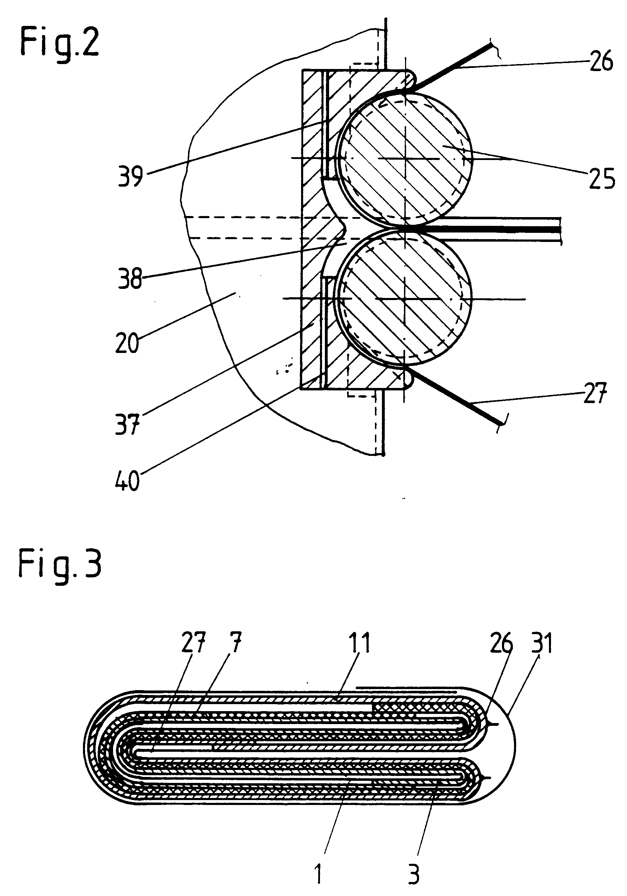

Der Kunststoffschlauch wird in der Faltvorrichtung 30 zusammengelegt und mit der Gewebebahn 31 von der Rolle 32 durch das Walzenpaar 33 geführt. Die Gewebebahn 31 wird in der Faltvorrichtung 34 um den zusammengelegten Kunststoffschlauch gelegt. Der eingehüllte Kunststoffschlauch durchläuft dann das Walzenpaar 35 und wird in der Wickelstation 36 aufgerollt. Der Aufbau des zusammengelegten Kunststoffschlauches ist in der Fig. 3 gezeigt.

Da Polyvinylalkohol sich nicht einfach durch Aufheizen verschweißen läßt sondern vorher in Gegenwart von Wasser quellen muß, ist bei der Verwendung von Deckfolien aus diesem Material eine besondere Konstruktion der Walzenabdichtung erforderlich, die Fig. 2 zeigt.

Die in die Gehäusewandung der Tränkwanne 20 eingesetzte Dichtung 37 aus PTFE für das Walzenpaar 25 hat in den aus der Gehäusewandung herausragenden Enden eine Kammer 38, in die über die Leitung 39 Wasserdampf eintritt. Die Kammer wird zur Walzenseite hin von den Rändern der Deckfolien 26 und 27 abgedichtet. Durch den direkten Kontakt mit dem Wasserdampf quellen die Folienränder und werden im Spalt der Enden des Walzenpaares 25 zusammengepreßt und dabei verschweißt. Durch die Leitung 40 kann der ggf. kondensierte Wasserdampf wieder austreten.

Das Herstellungsverfahren läßt sich dahingehend vereinfachen, daß die einzelnen Faserschichten in der Breite zueinander versetzt aufeinander gelegt und danach gemeinsam um den Folienschlauch gelegt werden. Dabei werden die Rollen mit den für den herzustellenden Schlauch in entsprechenden Breiten vorkonfektionierten Faserschichten in dem Rollenständer der vorgesehenen Überlappung entsprechend versetzt zueinander angeordnet. Kontaktfühler korrigieren die Position der Bahnrollen zueinander, um eine gleichbleibende Überlappung zu gewährleisten.

Auf dem Fügetisch werden die von den Rollenbahnen abgezogenen Einzellagen und der Folienschlauch so geführt, daß, von oben nach unten gesehen, unter dem flachliegenden PVA-Folienschlauch das Oberflächenvlies, darunter, versetzt zur ersten Lage, die Wirrfaserlage mit dem Diagonalgelege folgt, darunter, versetzt zur ersten und zweiten Lage, der in der Dicke durchmesserabhängig variable Abstandsfilz, darunter, versetzt zur dritten, zweiten und ersten Lage, wiederum eine Wirrfaserlage mit Diagonalgelege zu liegen kommt.

Dieses Bahnengelege wird in der Faltvorrichtung zu einem Ring mit versetzt zueinander angeordneten Einzellagen zusammengefügt und anschließend, flach liegend, in den Führungskanal der Vakuumstrecke eingeführt.

Im Gegensatz zu der verzahnten Überlappung der Faserschichten bei dem vorher geschilderten Herstellungsverfahren ergibt sich bei diesem Verfahren eine stufenförmige Überlappung mit geringerem Dehnungswiderstand in den Überlappungsbereichen.

## Patentansprüche

1. Verfahren zur Herstellung eines härtbaren Kunststoffschlauches aus einem inneren (1) und einem äußeren Folienschlauch (26, 27) und einem dazwischen angeordneten, mit härtbarem Harz getränkten mehrschichtigen Faseraufbau (3, 7, 11) durch Umhüllen des inneren Folienschlauchs (1) mit den Faserschichten, Auflegen der Deckfolien (26, 27), Verschweißen der Deckfolienränder zum äußeren Folienschlauch und Tränken des Faseraufbaus, **dadurch gekennzeichnet**, daß die in Schichten um den flachen inneren Folienschlauch(1) gelegten Faservliese, -gewebe oder -gelege (3, 7, 11) in einer mit Harz gefüllten Tränkwanne(20) getränkt und in der Tränkwanne(20) von den beiden Deckfolien(26, 27) umhüllt werden, deren Ränder beim Abpressen des Kunststoffschlauches miteinander verschweißt werden, während der fertige Kunststoffschlauch aus der Tränkwanne(20) austritt.

2. Verfahren nach Anspruch 1, **dadurch gekennzeichnet**, daß der mit Faserschichten(3, 7, 11) umhüllte Folienschlauch(1) unterhalb der Harzoberfläche in die Tränkwanne(20) eintritt.

3. Verfahren nach Anspruch 1, **dadurch gekennzeichnet**, daß die Faserschichten(3, 7, 11) vor dem Eintritt in die Tränkwanne(20) evakuiert werden.

4. Verfahren nach einem der Ansprüche 1 bis 3, **dadurch gekennzeichnet**, daß der Folienschlauch(1) aus Polyvinylalkohol besteht.

5. Verfahren nach einem der Ansprüche 1 bis 4, **dadurch gekennzeichnet**, daß die Deckfolien(26, 27) aus Polyvinylalkohol bestehen und an den Rändern durch Quellverschweißen in Gegenwart von Wasserdampf miteinander verbunden werden.

6. Verfahren nach einem der Ansprüche 1 bis 5, **dadurch gekennzeichnet**, daß der Kunststoffschlauch zusammengelegt, mit einer Schutzbahn(31) umhüllt und aufgewickelt wird.

7. Vorrichtung zur Herstellung eines härtbaren Kunststoffschlauches nach einem der Ansprüche 1 bis 6 bestehend aus Rollenböcken, Walzenpaaren (5, 9, 13, 15, 25, 33, 35), Faltvorrichtungen und Schweißvorrichtungen für die Ränder der Deckfolien, **dadurch gekennzeichnet**, daß nach der Faltvorrichtung(14) für die äußere Faserschicht(11) eine Tränkwanne(20) abgeordnet ist, die aus einem Tank(22) über ein Tauchrohr(23) mit einem härtbaren Harz befüllt werden kann, und in deren Rückwand sich ein Walzenpaar(25) befindet, das in der Mitte einen weiteren Spalt als an den Enden aufweist.

8. Vorrichtung nach Anspruch 7, **dadurch gekennzeichnet**, daß sich zwischen der Faltvorrichtung(14) und der Tränkwanne(20) ein Führungsschacht(16) befindet, der ggf. mit einer Vakuumkammer(17) versehen ist.

9. Vorrichtung nach einem der Ansprüche 7 oder 8, **dadurch gekennzeichnet**, daß die Tränkwanne(20) mit Dichtung(37) versehen ist, die eine zu den Enden des Walzenpaares(25) hin offene Kammer(38) aufweisen, die mit einer Zu-(39) und einer Ableitung(40) ausgerüstet ist.

10. Vorrichtung nach einem der Ansprüche 7 bis 9, **dadurch gekennzeichnet**, daß sich hinter der Tränkwanne(20) eine weitere Faltvorrichtung(30) mit Rollenbock(32) und eine Aufwickelvorrichtung(36) befinden.

## Claims

1. A method of producing a curable plastic tube from an inner tube of foil (1) and an outer tube of foil (26, 27) and an interposed multiple-layer fibre structure (3, 7, 11) impregnated with curable resin, by wrapping the inner tube of foil (1) with the fibre layers, laying the covering foils (26, 27) thereon, welding the edges of the covering foils to the outer tube of foil and impregnating the fibre structure, **characterized in that** the fibre fleeces, tissues or structures (3, 7, 11) laid around the flat inner tube of foil (1) in layers are impregnated in an impregnation trough (20) filled with resin and are wrapped in the impregnation trough (20) by the two covering foils (26, 27), the edges of which are welded together as the plastic tube is pressed off, while the finished plastic tube emerges from the impregnation trough (20).

2. A method according to Claim 1, **characterized in that** the tube of foil (1) wrapped with the fibre layers (3, 7, 11) enters the impregnation trough (20) below the surface of the resin.

3. A method according to Claim 1, **characterized in that** the fibre layers (3, 7, 11) are evacuated before entry into the impregnation trough (20).

4. A method according to one of Claims 1 to 3, **characterized in that** the tube of foil (1) consists of polyvinyl alcohol.

5. A method according to one of Claims 1 to 4, **characterized in that** the covering foils (26, 27) consist of polyvinyl alcohol and are joined together at the edges by solvent welding in the presence of water vapour.

6. A method according to one of Claims 1 to 5, **characterized in that** the plastic tube is laid together, is wrapped with a protective strip (31) and is wound up.

7. A device for producing a curable plastic tube according to one of Claims 1 to 6, comprising roller blocks, pairs of rollers (5, 9, 13, 15, 25, 33, 35), folding devices and welding devices for the edges of the covering foils, **characterized in that** the folding device (14) for the outer fibre layer (11) is followed by an impregnation trough (20) which can be filled with a curable resin from a tank (22) by way of an immersed pipe (23), and a pair of rollers (25) having a wider gap in the middle than at the ends are provided in the rear wall of the said impregnation trough (20).

8. A device according to Claim 7, **characterized in that** a guide channel (16), which is optionally provided with a vacuum chamber (17), is present between the folding device (14) and the impregnation trough (20).

9. A device according to one of Claims 7 or 8, **characterized in that** the impregnation trough (20) is provided with seal[s] (37) which have a chamber (38) open towards the ends of the pair of rollers (25) and provided with a supply line (39) and a removal line (40).

10. A device according to one of Claims 7 to 9, **characterized in that** a further folding device (30) with a roller block (32) and a winding device (36) are provided behind the impregnation trough (20).

## Revendications

1. Procédé pour la fabrication d'un tuyau plastique durcissable à partir d'une feuille tubulaire intérieure et extérieure et d'une structure fibreuse multicouche imprégnée de résine durcissable intercalée par enrobage de la feuille tubulaire intérieure avec les couches fibreuses, application des feuilles supérieures, soudure des bords de feuilles supérieures sur la feuille tubulaire extérieure et imprégnation de la structure fibreuse, caractérisé en ce que les garnitures ou textures tissées, nappes fibreuses (3, 7, 11) appliquées dans les couches autour de la feuille tubulaire interne plate (1) sont immergées dans une cuve d'imprégnation (20) remplie de résine et sont enveloppées dans la cuve d'imprégnation (20) par les deux feuilles de revêtement (26, 27) dont les bords sont soudés entre eux lors de l'extraction par pression du tuyau plastique.

2. Procédé selon la revendication 1, caractérisé en ce que la feuille tubulaire (1) enrobée des couches fibreuses (3, 7, 11) pénètre dans la cuve d'imprégnation (20) au-dessous de la surface de résine.

3. Procédé selon la revendication 1, caractérisé en ce que les couches fibreuses (3, 7, 11) sont mises sous vide avant l'entrée dans la cuve d'imprégnation 20.

4. Procédé selon l'une des revendications 1 à 3, caractérisé en ce que la feuille tubulaire 1 est constituée par de l'alcool de polyvinyle.

5. Procédé selon l'une des revendications 1 à 4, caractérisé en ce que les feuilles de revêtement (26, 27) sont constituées par de l'alcool de polyvinyle et sont reliées sur les bords par un collage par solvant ou collage homogène en présence de vapeur d'eau.

6. Procédé selon l'une des revendications 1 à 5, caractérisé en ce que le tuyau plastique est assemblé, enrobé d'une nappe de protection 31 et enroulé.

7. Dispositif pour la préparation d'un tuyau plastique durcissable selon l'une des revendications 1 à 6, constitué par des ensembles à rouleaux, des paires de cylindres, des dispositifs de pliage et des dispositifs de soudure ou collage pour les bords des feuilles de revêtement, caractérisé en ce qu'après le dispositif de pliage (14) pour la couche fibreuse extérieure (11) est agencée une cuve d'imprégnation (20) qui peut être remplie à partir d'un réservoir (22) par l'intermédiaire d'un tuyau d'immersion (23) d'une résine durcissable et cuve qui comporte une paire de cylindres (25) sur la paroi arrière, paire de cylindres présentant une emprise plus large au centre que sur les extrémités.

8. Dispositif selon la revendication 7, caractérisé en ce qu'entre le dispositif de pliage (14) et la cuve d'imprégnation (20) est prévue une colonne de guidage (16) éventuellement munie d'une chambre de vide (17).

9. Dispositif selon l'une des revendications 7 ou 8, caractérisé en ce que la cuve d'imprégnation (20) est munie d'une étanchéité (37) avec sur les extrémités de la paire de cylindres (25) une chambre ouverte (38) qui est munie d'une amenée (39) et d'une évacuation (40).

10. Dispositif selon l'une des revendications 7 à 9, caractérisé en ce qu'en amont de la cuve d'imprégnation (20) se trouve un dispositif de pliage supplémentaire (30) avec un chevalet à rouleaux (32) et un dispositif d'enroulage (36).
